## Europäisches Patentamt
## European Patent Office
## Office européen des brevets

(19)

(11) Veröffentlichungsnummer: **0 061 419**

**A2**

(12) # EUROPÄISCHE PATENTANMELDUNG

(21) Anmeldenummer: **82730039.3**

(22) Anmeldetag: **23.03.82**

(51) Int. Cl.³: **F 03 B 13/12**

(30) Priorität: **24.03.81 DE 3112046**

(43) Veröffentlichungstag der Anmeldung:
**29.09.82 Patentblatt 82/39**

(84) Benannte Vertragsstaaten:
**DE FR GB NL**

(71) Anmelder: **Janisch, Alfons**
**Grässeweg 18**
**D-1000 Berlin 20(DE)**

(72) Erfinder: **Janisch, Alfons**
**Grässeweg 18**
**D-1000 Berlin 20(DE)**

(74) Vertreter: **Lüke, Dierck-Wilm, Dipl.-Ing.**
**Gelfertstrasse 56**
**D-1000 Berlin 33(DE)**

(54) Schaukelbojenantrieb.

(57) Bei einem bekannten Schaukelbojenantrieb mit einem mit Führungselementen versehenen Bojenkörper sind eine Vielzahl von Verzahnungen vorgesehen, welche die Bauart unwirtschaftlich in der Herstellung machen. Darüber hinaus neigt die Führung des Bojenkörpers zu Verkantungen, so dass in Folge auftretender Reibung erhebliche Verluste eintreten. Um einen in der Herstellung einfachen und preiswerten Schaukelbojenantrieb zu schaffen, der darüber hinaus eine einwandfreie Führung des Bojenkörpers gewührleistet, sieht die Erfindung als Führungselemente zwei im Abstand voneinander und parallel zueinander angeordnete Führungsstangen vor, wobei die Zahnstange gabelförmig ausgebildet und jede Verzahnung an einer der Führungsstangen geführt ist und wobei die Ritzel zwischen den beiden Verzahnungen auf einer gemeinsamen Achse drehbar gelagert sind. Hierdurch wird einerseits die Führung des Bojenkörpers bei seinen Auf- und Abbewegungen verbessert und andererseits die Möglichkeit geschaffen, dass die Ritzel zwischen den beiden Verzahnungen auf einer gemeinsamen Achse gelagert werden können, wodurch sich der getriebetechnische Aufwand erheblich verringert.

FIG.5

Croydon Printing Company Ltd.

EP 0 061 419 A2

Albrecht & Lüke, Gelfertstr. 56, D—1000 Berlin 33

# Patentanwälte
## Dipl.-Ing. Hans Albrecht
## Dipl.-Ing. Dierck-Wilm Lüke

Gelfertstraße 56
D—1000 Berlin 33
Telefon: (030) 831 30 28
Telegramme: Patentalbrecht Berlin
Postscheck: Berlin West 336 26-105
Bank: Berliner Bank AG
Konto-Nr. 43 09 53 99 00

| Ihr Zeichen | Ihre Nachricht | Unser Zeichen | Datum |
|---|---|---|---|
| | | 10433 | 23. März 1982 |

Alfons Janisch, Grässeweg 18, D - 1000 Berlin 20

------------------------------------------------

Schaukelbojenantrieb

------------------------------------------------

Die Erfindung bezieht sich auf einen Schaukelbojenantrieb gemäss der Gattung des Anspruches 1.

Bei einem solchen, aus der DE-OS 24 31 402 vorbekannten Schaukelbojenantrieb kämmem die beiden Ritzel jeweils mit den Innenverzahnungen zweier Kegelräder, die wiederum über Aussenverzahnungen auf ein weiteres Kegelrad einwirken, das schliesslich über eine Stirnverzahnung den Energieerzeuger, insbesondere eine elektrische Dynamomaschine antreibt. Diese Bauart ist wegen der Vielzahl der Verzahnungen unwirtschaftlich in der Herstellung.

— 2 —

Darüber hinaus neigt die Führung des Bojenkörpers zu Verkantungen, so dass in Folge auftretender Reibung erhebliche Verluste auftreten.

Der Erfindung liegt von daher die Aufgabe zugrunde, einen Schaukelbojenantrieb der gattungsgemässen Art zu schaffen, der einfach und preiswert in der Herstellung ist und der darüber hinaus eine einwandfreie Führung des Bojenkörpers gewährleistet.

Die Lösung dieser Aufgabe ergibt sich aus den kennzeichnenden Merkmalen des Anspruches 1. Durch die gabelförmige Ausbildung der Zahnstange und durch Führung jeder Verzahnung der Zahnstange an einer der im Abstand voneinander und parallel zueinander angeordneten Führungsstangen wird einerseits die Führung des Bojenkörpers bei seinen Auf- und Abbewegungen unter Einwirkung der Wellenbewegung des Wassers verbessert und andererseits die Möglichkeit geschaffen, dass die Ritzel zwischen den beiden Verzahnungen auf einer gemeinsamen Achse gelagert werden können, wodurch sich der getriebetechnische Aufwand erheblich verringert.

In besonders zweckmässiger Weise durchdringen die beiden Führungsstangen den Bojenkörper. Dies kann mit einem gewissen Spiel erfolgen, wodurch keine Reibung auftritt, jedoch die Führung der Zahnstangen an den Führungsstangen die Führungskräfte des Bojenkörpers aufnehmen muss. Die Führung des Bojenkörpers kann darüber hinaus auch an den beiden Führungsstangen selbst, z.B. durch Gleit- oder Wälzlager erfolgen. In diesem Falle kann die Führung der Zahnstangen an den Führungsstangen schwächer ausgebildet werden.

Als Führungsstangen werden insbesondere Rohre vorgesehen, die auf ihren gegeneinander gerichteten Seiten mit Längsschlitzen versehen sind, in welche Führungselemente eingreifen, an denen die beiden Verzahnungen der gabelförmigen Zahnstange angebracht sind.

In zweckmässiger Weise werden mehrere Paare von Führungsstangen mit auf diesen geführten Bojenkörpern im Abstand der Abmessungen der Bojenkörper voneinander angeordnet, wobei lediglich eine einzige durchgehende Achse für alle Ritzel vorgesehen sein muss, die dem Antrieb des Energieerzeugers dient. Zweckmässigerweise ist zwischen der Achse und dem Energieerzeuger noch ein mit einer Drehzahlregelung, insbesondere einem Schwungrad versehenes Getriebe angeordnet. Dabei können die Ritzel aller Paare von Führungsstangen, das Getriebe und der Energieerzeuger in einem von den Führungsstangen getragenen Gehäuse angeordnet sein .

Eine Ausführungsform der Erfindung wird nachfolgend anhand der Zeichnungen näher erläutert. Es zeigen:

Fig. 1   eine Seitenansicht mehrerer hintereinander angeordneter Schaukelbojenantriebe,

Fig. 2   einen Schnitt gemäss der Linie II - II in Fig. 1 durch einen Schaukelbojenantrieb,

Fig. 3   eine vergrösserte Darstellung des Details X in Fig. 2 ,

Fig. 4   einen Schnitt gemäss IV-IV in Fig.3 und

Fig. 5   eine perspektivische Ansicht dreier Antriebe.

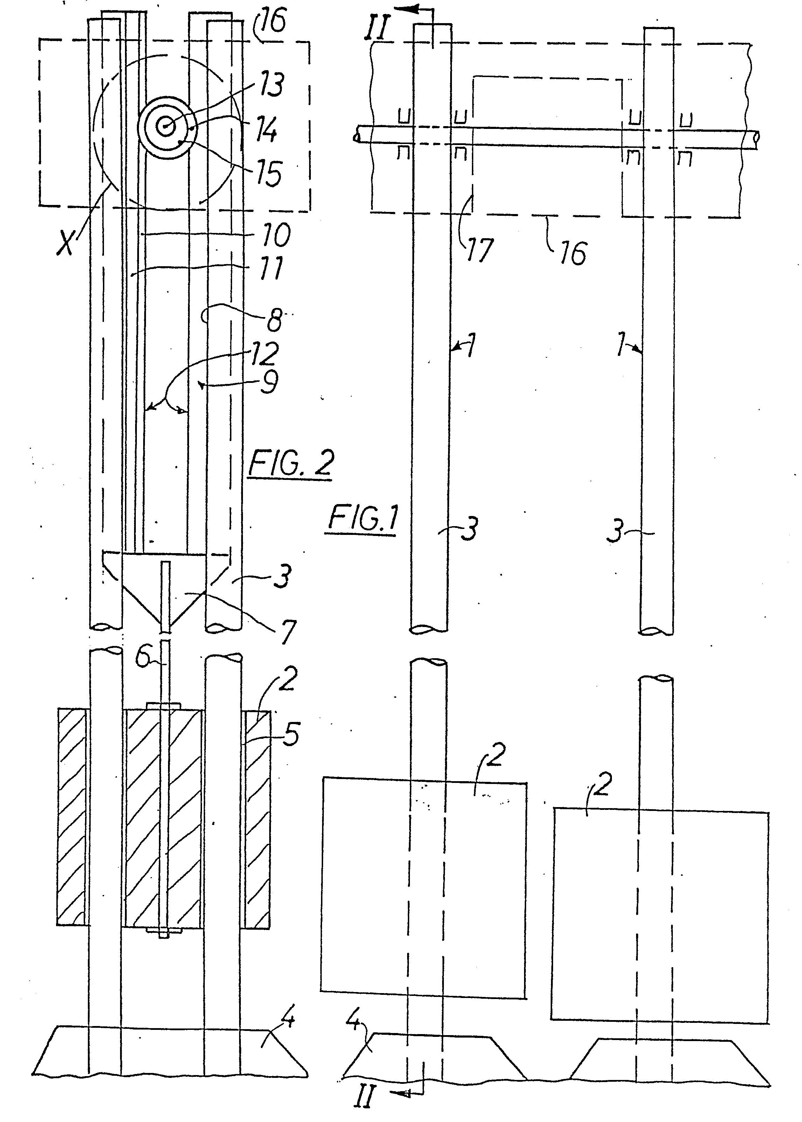

Jeder Schaukelbojenantrieb 1 umfasst als Führungselemente
für einen Bojenkörper 2  zwei im Abstand voneinander und
parallel zueinander angeordnete, als Rohre 3 ausgebildete
Führungsstangen, welche den Bojenkörper 1 durchdringen,
wie es insbesondere in Fig.2 dargestellt ist. Die Rohre 3
sind in Sockeln 4, insbesondere aus Beton, festgelegt,
die auf dem Grund eines Gewässers, insbesondere eines
Meeres festverankert sind.

Der Bojenkörper 2 besteht aus einem auf Wasser, insbesondere
Meerwasser schwimmfähigen Material, dessen Dichte somit
kleiner als  1 ist. Der am besten kugelige, flach auf dem
Wasser liegende linsenförmige oder aber auch würfelförmige
Bojenkörper 2 ist von beiden Rohren 3 in Durchgangsöffnungen 5 durchdrungen, welche den Aussenmantel der Rohre 3 mit Spiel umgeben.  Hierdurch wird eine Reibung zwischen Bojenkörper 2 und Rohren 3 vermieden. Anstelle von Durchgangsöffnungen mit Spiel können jedoch auch Lagerungen in Form von Gleit- oder Wälzlagerungen vorgesehen sein.


Der Bojenkörper 2 ist zentrisch von einer Stange 6 durchdrungen, die an einem dreieckförmigen Joch 7 insbesondere durch Schweißen festgelegt ist. Die beiden äusseren Ecken des Joches 7 erstrecken  sich in die Rohre 3 durch Längsschlitze 8 hinein, die auf den einander zugewandten Seiten

der Rohre 3 in diese eingebracht sind. In den Längsschlitzen 8 sind ferner Führungselemente 9 in Form von Flacheisen 10 geführt, die an die obere Fläche des dreieckförmigen Joches 7 im Bereich der äusseren Endflächen angeschweißt sind. Die Dicke der Flacheisen 10 entspricht in etwa der Öffnungsweite

der Längsschlitze 8 innerhalb der Rohre 3, wobei ein für eine Gleitbewegung notwendiges Spiel verbleibt. Auf diese Weise wird eine lange Führung für das Joch 7 innerhalb der Längsschlitze 8 der Rohre erzielt, wodurch gleichzeitig

auch eine lange Längsführung für den Bojenkörper 2 und ein Ausgleich für Wasserstandsunterschiede bei Ebbe und Flut erreicht werden können .

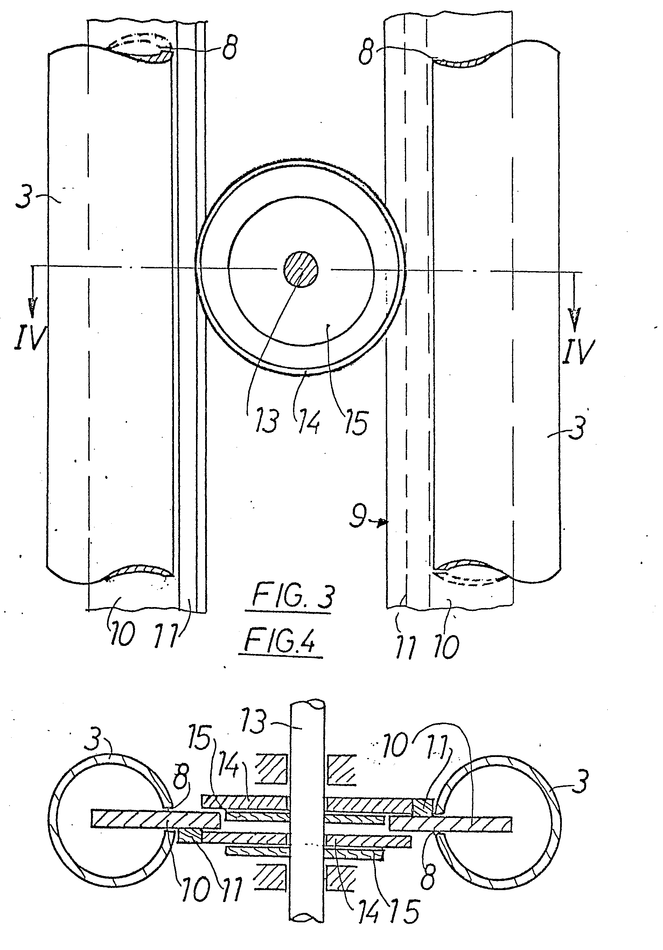

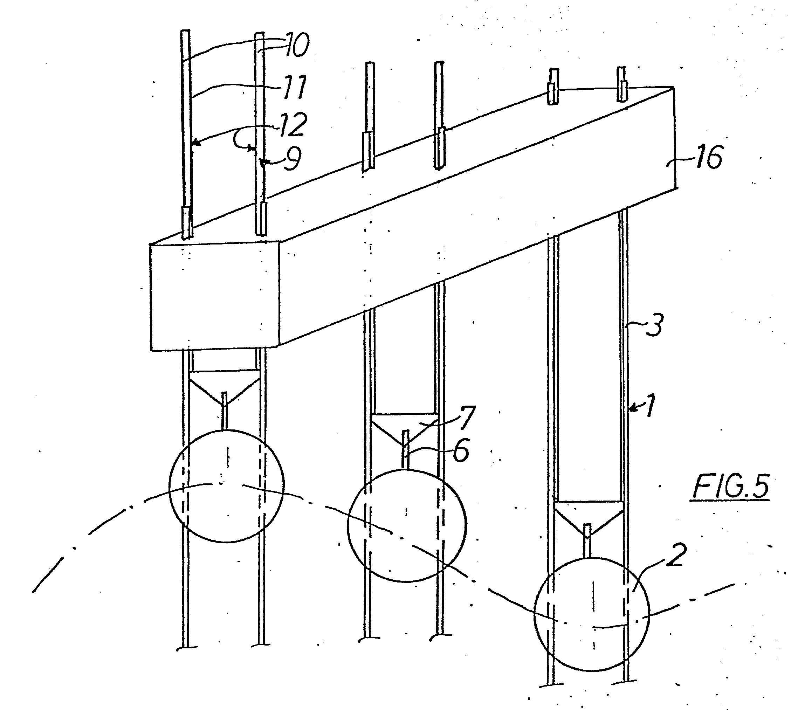

Wie es in den Figuren 3 und 4 näher dargestellt ist, ragen die Flacheisen 10 mit einem Teil ihrer Breite in das Innere der Rohre 3 hinein und mit einem weiteren Teil ihrer Breite aus den Rohren 3 durch deren Längsschlitze 8 hinaus in den zwischen beiden Rohren 3 befindlichen Zwischenraum. Auf einander gegenüberliegenden Seiten tragen die Flacheisen 10 auf ihrem ausserhalb der Rohre 3 liegenden Bereich je eine Verzahnung 11 einer Zahnstange 12, die somit gabelförmig ausgebildet ist und deren Verzahnungen 11 mittels der Flacheisen 10 an den als Führungsstangen dienenden Rohre 3 geführt sind.

Im oberen Bereich der Rohre 3 ist zwischen den Rohren 3 eine Achse 13 gelagert, die sich bei im wesentlichen vertikalen Rohren 3 im wesentlichen horizontal zur Vertikalachse der Rohre 3 und zwischen diesen erstreckt. Auf der Achse 13 sind zwei Ritzel 14 drehbar gelagert, die jeweils mit einer der Verzahnungen 11 der Zahnstange 12 in Eingriff stehen. Jedes Ritzel 14 ist mit einer Ein- Richtungskupplung 15 versehen, die gleichsinnig geschaltet sind. Hierdurch wird bewirkt, dass bei einer Aufwärtsbewegung des Bojenkörpers 2 eins der Ritzel 14 über seine zugeordnete Ein-Richtungskupplung mit der Achse 13 starr verbunden ist, so dass diese in einer bestimmten Richtung angetrieben wird. Bei einer Abwärtsbewegung des Bojenkörpers 2 entkuppelt die erste Ein- Richtungskupplung 15 das zugehörige Ritzel 14, wohingegen die andere Ein- Richtungskupplung 15 das andere Ritzel 14 fest mit der Achse 13 verbindet, so dass die Achse 13 wiederum in gleicher Richtung angetrieben wird. Somit erfolgt bei kontinuierlicher Auf- und Abwärtsbewegung des Bojenkörpers 2 infolge der Wellenbewegung eines Gewässers eine kontinuierliche , gleichgerichtete Drehbewegung der Achse 13.

Zur Ausnutzung der schaukelnden Wellenbewegung an der Oberfläche eines Gewässers, insbesonderes eines Meeres, sind gemäss Fig. 1 mehrere Schaukelbojenantriebe 1 hintereinander und in Abständen voneinander angeordnet, wobei die Abstände durch die Abmessungen der Bojenkörper 2 bzw. durch die regelmässig auftretende Wellenlänge der Wellenbewegung des Wassers vorgegeben werden. In einfacher Weise kann hierbei durch sämtliche Schaukelbojenantriebe 1 eine gemeinsame Achse 13 hindurchgeführt werden, da diese senkrecht zu einer durch die Vertikalachsen der Rohre 3 gelegte Ebene verläuft. Folglich können mehrere Schaukelbojenantriebe 1 auf lediglich einen Energieerzeuger 17 , insbesondere eine elektrische Dynamomaschine einwirken. Zweckmässigerweise wird zum Ausgleich von Ungleichförmigkeiten in der Drehzahl der Achse 13 zwischen diese und den Energieerzeuger 17 ein mit einer Drehzahlregelung, insbesondere mit einem Schwungrad, versehenes Getriebe eingeschaltet. Bei dieser Ausführungsform sind sämtliche Ritzel 11 aller Paarungen von Rohren 3 sowie der Energieerzeuger 17 und ein eventuell erforderliches Getriebe innerhalb eines Gehäuses 16 angeordnet, das von allen Rohren 3 getragen ist.

Die Rohre 3 können insbesondere auch aus Gittermasten gebildet sein .

Die Figur 5 zeigt drei hintereinander angeordnete Schaukelbojenantriebe 1 , deren Bojenkörper 2 auf einer Welle , deren Flanke und im Wellental auf der Wasseroberfläche schwimmen und ihre Auf- und Abbewegungen an die Antriebe 1 zur Antriebserzeugung über die Achse 3 weitergeben .

Patentanwälte
Dipl.-Ing. Hans Albrecht
Dipl.-Ing. Dierck-Wilm Lüke

Gelfertstraße 56
D−1000 Berlin 33
Telefon: (030) 831 30 28
Telegramme: Patentalbrecht Berlin
Postscheck: Berlin West 33626-105
Bank: Berliner Bank AG
Konto-Nr. 43095 39900

Albrecht & Lüke, Gelfertstr. 56, D−1000 Berlin 33

| Ihr Zeichen | Ihre Nachricht | Unser Zeichen | Datum |
|---|---|---|---|
|  |  | 10433 | 23. März 1982 |

Patentansprüche
------------------------------

1. Schaukelbojenantrieb mit einem mit Führungselementen versehenen Bojenkörper, mit einer vom Bojenkörper auf-und abbewegbaren Zahnstange mit zwei Verzahnungen, in welche mit Einrichtungs - Kupplungen versehene Ritzel eingreifen, und mit einem diesem nachgeschalteten Energieerzeuger, insbesondere elektrische

Dynamomaschine,

d a d u r c h   g e k e n n z e i c h n e t,

dass als Führungselemente zwei im Abstand voneinander und parallel zueinander angeordnete Führungsstangen vorgesehen sind, dass die Zahnstange (12) gabelförmig ausgebildet und jede Verzahnung (11) an einer der Führungsstangen geführt ist und dass die Ritzel (14) zwischen den beiden Verzahnungen (11) auf einer gemeinsamen Achse (13) drehbar gelagert sind.

2. Schaukelbojenantrieb nach Anspruch 1, dadurch gekennzeichnet, dass die beiden Führungsstangen den Bojenkörper (2) mit Spiel durchdringen.

3. Schaukelbojenantrieb nach Anspruch 1 , dadurch gekennzeichnet, dass der Bojenkörper (2) mittels Lagerungen auf den Führungsstangen geführt ist.

4. Schaukelbojenantrieb nach einem der Ansprüche 1 bis 3, dadurch gekennzeichnet, dass als Führungsstangen auf ihren gegeneinander gerichteten Seiten mit Längsschlitzen (8) versehene Rohre (3) vorgesehen sind und dass die beiden Verzahnungen (11) der gabelförmigen Zahnstange (12) mit innerhalb der Längsschlitze (8) geführten Führungselementen versehen sind.

5. Schaukelbojenantrieb nach Anspruch 4, dadurch gekennzeichnet, dass als Führungselemente Flacheisen (10) vorgesehen und über ein gemeinsames Joch (7) mit dem Bojenkörper (2) starr verbunden sind.

6. Schaukelbojenantrieb nach einem der vorangegangenen Ansprüche, dadurch gekennzeichnet, dass mehrere Paare von Führungsstangen in Abständen hintereinander angeordnet
und mit einer für alle Ritzel (11) gemeinsamen Achse (13)
versehen sind, an die ein Energieerzeuger (16) angeschlossen ist.

5- 7. Schaukelbojenantrieb nach Anspruch 6, dadurch gekennzeichnet, dass die Ritzel (11) aller Paare von Führungsstangen und der Energieerzeuger (16) innerhalb eines
von den Führungsstangen getragenen Gehäuses angeordnet sind.

FIG. 2

FIG.1

0061419

FIG. 3

FIG.4

FIG.5